# EUROPEAN PATENT SPECIFICATION

(11) **EP 4 142 317 B1**
(45) Date of publication and mention of the grant of the patent: **10.07.2024**
(21) Application number: 21193695.0
(22) Date of filing: 30.08.2021
(51) Int. Cl.: G06V 20/59, H04W 4/90, H04W 4/80, H04W 4/44

(54) **VEHICLE EMERGENCY SYSTEM AND METHOD FOR PROVIDING EMERGENCY INFORMATION**
FAHRZEUGNOTSYSTEM UND VERFAHREN ZUR BEREITSTELLUNG VON NOTFALLINFORMATIONEN
SYSTÈME D'URGENCE POUR VÉHICULE ET PROCÉDÉ DE FOURNITURE D'INFORMATIONS D'URGENCE

(43) Date of publication of application: 01.03.2023
(73) Proprietor: Emsense AB, 461 29 Trollhättan (SE)
(72) Inventor: Wahlström, Rickard, 416 48 Göteborg (SE); Wingate, Thomas, 837 94 Järpen (SE); Azhirnian, Armin, 412 58 Göteborg (SE)
(74) Representative: AWA Sweden AB

(56) References cited:
- FR-A1- 3 104 113
- US-A1- 2017 274 906

## Description

### Technical field

The present invention relates to systems and methods for providing emergency information from a vehicle accident, wherein the information may be used for emergency response prioritization.

### Background

Responding to a vehicle accident is a logistical and communicative challenge for any emergency responder. Not only does the emergency responder need to act quickly in terms getting a resource to the site of the accident, but they also need to be fast in assesing what resource to allocate. The task is even more complex when dealing with an accident involving multiple vehicles. Especially challenging is when multiple accidents and other incidents that require attention occur simultaneously, straining the available resources the emergency responder has at hand.

There exists in the prior art solutions aimed at dealing with these issues. Among existing solutions, the document WO20136658 may be mentioned. The document discloses a system in which medical information about the passengers in a vehicle involved in an accident is relayed to an emergency responder. Furthermore, the document US 2017/274906, which discloses a vehicle driver monitoring system, may be mentioned.

However, there are some shortcomings in the prior art. Such system, while being able to provide important information to an emergency responder, does e.g. not solve the problem of how to efficiently make use of said information.

### Summary

An object of the present inventive concept is therefore to overcome the above problems, and to provide a solution to at least some extent, improves the prior art. This, and other objects, which will become apparent in the following, is accomplished by means of vehicle emergency communication system defined in the accompanying claims.

According to a first aspect of the present invention, a vehicle emergency communication system for providing emergency information from a vehicle accident is provided according to claim 1, the system comprising: a sensor module adapted to be arranged in a vehicle for sensing and collecting emergency information from a vehicle accident, the sensor module comprising a radar sensor for detecting at least one physiological parameter of a vehicle passenger; a short range communication module for providing emergency information to a short range communication receiver; and a long range communication module for providing emergency information to at least one long range communication receiver such that the emergency information may be used for emergency response prioritization.

A short range communication module according to the present invention is to be understood as a module that is adapted to handle information regarding a vehicle accident collected by a sensor module. A short range communication module is furthermore adapted to transmit information collected and provided by a sensor module such that the information may be received by a receiver within or outside of the system according to the first aspect. A short range communication module may be integrated in any other device or on a chip. Short range communication is to be understood as wireless communication transmitted from a low-power transmitter. A short range communication module may e.g. be a Bluetooth device or Wi-Fi device. In at least one exemplary embodiment, the short range communication module is a short range radio module.

Similarly, a long range communication module according to the present invention is to be understood as a module that is adapted to handle information regarding a vehicle accident collected by a sensor module. A long range communication module is furthermore adapted to transmit information collected and provided by a sensor module such that the information may be received by a receiver within or outside of the system according to the first aspect. A long range communication module may be integrated in any other device or on a chip.

A vehicle accident is to be understood as any accident that in any way involve a vehicle. A vehicle accident may e.g. be an accident in which a passenger in a vehicle suffers injury, loses consciousness or otherwise falls into a pathological state without the vehicle being damaged. Alternatively, both a passenger and a vehicle may suffer injury/damage. Alternatively, only the vehicle is damaged and the passenger remains unharmed.

Since the system according to the first aspect comprises both a short range and long range communication module, a more adaptive system is provided. For example, the system may provide the same information to two different type of receivers simultaneously. Alternatively, the system may provide a subset of the information collected by the sensor module through long range communication and another subset of the information through short range communication, thereby providing adequate information based on intended receiver. As a non-limiting example, the system may provide information about how many passengers are present in the vehicle through long range communication with an emergency responder such that the responder may dispatch an adequate amount of ambulances, whereas the system may provide information regarding specific vital signs of individual passengers through short range communication to emergency personnel at the scene of the accident in order for them to prioritize in and coordinate the aiding effort.

Long range communication is provided to a plurality of receivers.

In at least one exemplary embodiment, the short range communication receiver is a hand-held device. The hand-held device may e.g. be arranged in an emergency vehicle, such as an ambulance. Thus, the hand-held device may be configured to be used by emergency personnel. As such, the system is adapted to provide the emergency information directly to an emergency vehicle that has been dispatched for dealing with the vehicle accident, when the emergency vehicle is in range of the short range communication, i.e. when the vehicle is close to the scene of the accident. Since the delay in providing the information to the personnel that are to handle the accident is reduced, a more efficient system is provided.

In at least one exemplary embodiment, the physiological parameter is respiration.

By detecting the respiration state of a passenger, crucial information of the passenger may be inferred. For example, the state of respiration may provide information about the mental state of a passenger, i.e. if the passenger is in shock or experiences anxiety or stress etc. Detecting respiration state may comprise detecting respiration rate and respiration depth.

According to the invention, the system further comprises a backend server for storing and processing emergency information from a vehicle accident, wherein the long range communication module is configured for providing emergency information to the backend server such that the backend server constitutes said long range communication module.

By providing a system comprising a backend server, a more robust system is provided. The backend server stores inter alia the information collected by the sensor module such that it may be retrieved from the backend server should there arise any communicative error between the modules for short and long range communication and any receiver with which one or more of the modules communicate. Furthermore, the backend server processes the information. For example, the backend server may refine the information such that it is easier to analyze or easier to transfer etc.

In at least one exemplary embodiment, the means for short range communication is adapted to encrypt the emergency information that encrypted emergency information is provided, and wherein short range communication receiver is adapted to decrypting the encrypted emergency information.

As such, the information, which may comprise sensitive personal information of one or more passengers of the vehicle involved in the accident, is not readily available to the public.

According to a second aspect of the present invention, a method for providing emergency information from a vehicle accident is provided according to claim 7, the method comprising: detecting a vehicle accident; collecting emergency information from the vehicle accident comprising sensing at least one physical parameter of a vehicle passenger with a radar sensor; providing emergency information with a means for short range communication such that the emergency information may be retrieved by at least one short range communication receiver; providing emergency information with a means for long range communication to at least one long range communication receiver such that the emergency information may be used for emergency response prioritization.

The same technical effects and benefits that are discussed in relation to the first aspect of the present invention are applicable to the second aspect of the present invention.

In at least one exemplary embodiment, one physical parameter is respiration state.

The same technical effects and benefits that are discussed in relation to the first aspect of the present invention are applicable to the second aspect of the present invention.

According to the invention, the method further comprises providing emergency information with a means for long range communication to a backend server for storing and processing emergency information from a vehicle accident.

The same technical effects and benefits that are discussed in relation to the first aspect of the present invention are applicable to the second aspect of the present invention.

According to the invention, the method further comprises: pre-sensing the at least one physical parameter before detecting a vehicle accident; and storing data of the physical parameter in the backend server before detecting a vehicle accident.

By storing data of the physical parameter in the backend server prior to the vehicle accident, the backend server may more easily and more efficiently access and process the data.

According to the invention, the method further comprises comparing the emergency information from the vehicle accident with the data of the physical parameter stored in the backend server, thereby producing processed data of the physical parameter.

By comparing information of a certain physical parameter collected during the accident with the pre-sensed data of the parameter, more reliable data pertaining to the change of the parameter is produced. Thereby, the more reliable data may further improve emergency response prioritization.

As a non-limiting example, one physical parameter may be organ position. As such, the position of one or more internal organs of a passenger may be pre-sensed so that the system, including the backend server, has a reference data set with which data gathered during or after an accident may be compared.

In at least one exemplary embodiment, the processed data of said physical parameter is provided to the at least one long range communication receiver.

The more reliable data is thus subsequently forwarded to another long range communication receiver, such as a receiver arranged at an emergency dispatcher, where it can provide a basis for further improved emergency response prioritization.

In at least one exemplary embodiment, the method further comprises: encrypting the emergency information provided with the means for short range communication such that encrypted emergency information is provided; and decrypting the encrypted emergency information with the short range communication receiver.

As such, the information, which may comprise sensitive personal information of one or more passengers of the vehicle involved in the accident, is not readily available to the public.

### Brief description of the drawings

These and other embodiments of the present invention will now be described in more detail, with reference to the appended drawings showing exemplary embodiments of the present invention, wherein:
Fig. 1 is a schematic illustration of the system according to the first aspect of the present invention.
Fig. 2 is a flow diagram of the second aspect of the present invention.

### Detailed descpription

In the following detailed description, some embodiments of the present invention will be described. However, it is to be understood that features of the different embodiments are exchangeable between the embodiments and may be combined in different ways, unless anything is specifically indicated. Even though in the following description, numerous details are set forth to provide a more thorough understanding of the present invention, it will be apparent to one skilled in the art that the present invention may be practiced without these details. In other instances, well known constructions or functions are not described in detail, so as not to obscure the present invention.

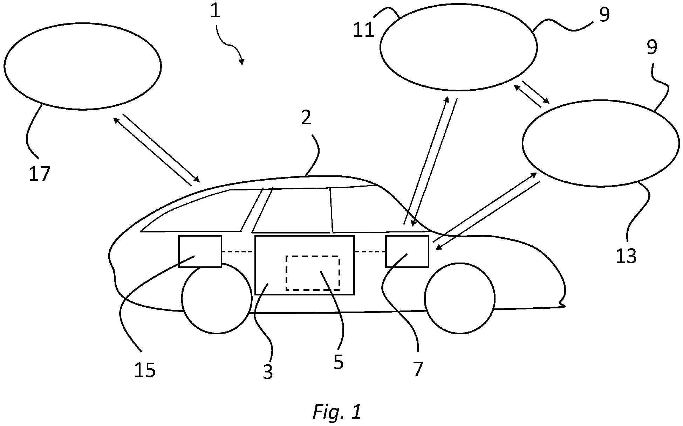

In Fig. 1, the system 1 according to an embodiment of the first aspect of the present invention is illustrated. A vehicle 2 contains one or more passengers (not shown). The vehicle comprises a sensor module 3. If the vehicle 2 is involved in an accident, the sensor module 3 is adapted for sensing and collecting emergency information from the accident. Whether or not an accident has occurred may be detected in a variety of ways, may be determined based on a variety of parameters. For example, the system 1 may receive input from one or more crash sensors (not shown) of the vehicle 2 indicating that the vehicle 2 has been subjected to an impact. Alternatively, the system 1 may receive input based on that another system in the vehicle has reacted to an impact, for example that an airbag (not shown) has been triggered.

The sensor module 3 comprises a radar sensor 5 for detecting at least one physiological parameter of a vehicle passenger. Data pertaining to the at least one physiological parameter of the vehicle passenger is thus comprised in the emergency information. The physiological parameter may be e.g. be respiration. Respiration may comprise respiration rate and respiration depth. The physiological parameter may be heart beat, heart beat intensity, heart beat variability, body pose, body motion, bleeding or drowsiness etc.

The sensor module 3 may comprise other sensors adapted to collect information through other means. The sensor module 3 may e.g. comprise an electromyographic (EMG) sensor, an electrocardiographic (ECG) sensor, a near-IR sensor or a vision based sensor, such as a camera.

The system 1 further comprises a long range communication module 7. The module 7 is adapted to provide and receive long range communication with any number of long range communication receivers 9. A long range communication receiver 9 may be any device configured to receive long range communication. Any long range communication receiver 9 may be arranged at an external party that may further process the data, such as an OEM, an emergency dispatcher, other vehicles, e.g. vehicles in the vicinity of the vehicle that has suffered an accident etc.

In Fig. 1, one long range communication receiver 9 is a backend server 11. The backend server 11 is adapted for storing and processing emergency information from the vehicle accident. The backend server 11 may e.g. store pre-sensed data pertaining to any physiological parameter of a passenger of the vehicle, or any physical parameter of the vehicle. As such, when an accident has occurred, emergency information of the accident may be compared to any data pre-sensed and stored in the backend server 11. This way, processed data may be produced. The data may e.g. be processed such that any physiological or physical parameter is easier to distinguish, easier to process, easier to access or quicker to access etc.

In Fig. 1, another long range communication receiver 9 is an emergency responder device 13 adapted to be arranged at an emergency responder. The emergency responder device 13 is further adapted to receive emergency information and to process emergency information. For example, the emergency responder device 13 may process the emergency information such that an emergency response prioritization scheme is produced. An emergency response prioritization scheme may e.g. be an order of priority for receiving emergency care, or a number of emergency vehicles, such as ambulances, that are to be dispatched to the scene of the accident. The data processed by the backend server 11 may be provided to the emergency responder device 13.

The system further comprises a short range communication module 15 adapted to provide short range communication to at least one short range communication receiver 17. The short range communication module 15 may e.g. be a radio module. The short range communication module 15 and the a long range communication module 7 may be adapted to provide the same emergency information. Alternatively, the modules 7, 15 may be adapted to provide different subsets of the emergency information. The long range communication module 7 may e.g. be adapted to provide the full set of emergency information whereas the short range communication module 15 may be adapted to provide a subset of the emergency information.

The short range communication receiver 17 may be any device adapted to receive short range communication. The short range communication receiver 17 may e.g. be hand-held device. The short range communication receiver 17 may thus be adapted to be arranged in an emergency vehicle, such as an ambulance. The ambulance may e.g. have been dispatched by the emergency responder device 13. In this example, the ambulance in which the short range communication receiver 17 is arranged will, when in range of short range communication, be able to receive emergency information through the short range communication receiver 17 instead of through the emergency responder device 13. Thus, the ambulance and the emergency response personnel therein may receive information relevant for the emergency effort in real-time, or at least with less time delay.

In some embodiments, providing short range communication may only be performed if a short range communication receiver 17 is present within a set radius of the short range communication module 15. For example, detection of the short range communication receiver 17 by the short range communication module 15 may activate short range communication.

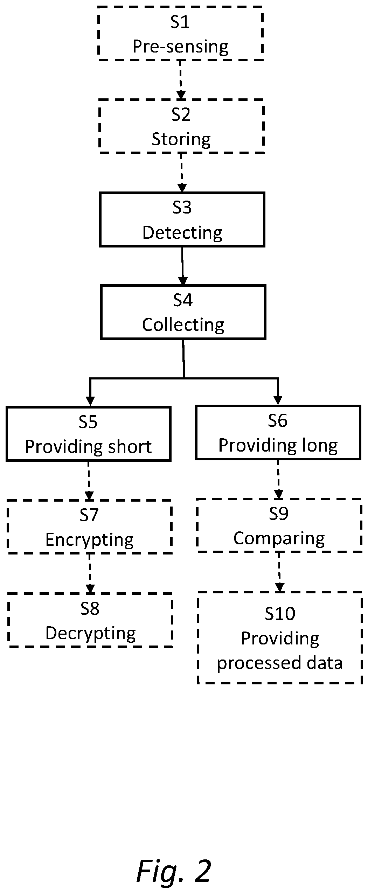

Fig. 2 is a schematic flow diagram illustrating a method according to the second aspect of the present invention. During detecting S3 a vehicle accident, the system 1 determines whether or not a vehicle accident has occurred. Detecting S3 may be performed in a variety of ways, and whether or not a vehicle accident has occurred may be determined based on a variety of parameters. For example, the system 1 may receive input from one or more crash sensors (not shown) of the vehicle indicating that the vehicle has been subjected to an impact. Thus, detecting S1 a vehicle accident may comprise detecting a vehicle impact. Alternatively, the system 1 may receive input based on that another system in the vehicle has reacted to an impact, for example that an airbag has been triggered.

During collecting S4 emergency information from the vehicle accident, at least one physical parameter of a vehicle passenger is sensed with a radar sensor 5. Collecting S4 may be a continuous process. Collecting S4 may alternatively be performed during a discrete time interval. Collecting S4 is performed by a sensor module 3. The information that is collected may relate to any physiological parameter of any number of passengers of the vehicle or any physical parameter of the vehicle. The physiological parameter may be a respiration state or organ position of a passenger of the vehicle.

The emergency information collected by the sensor module 3 during the step of collecting S4 is then provided S5 with a short range communication module 15 to at least one short range communication receiver 17. A short range communication receiver 17 may receive the emergency information continuously. Alternatively, a short range communication receiver 17 may receive the emergency information during a discrete time interval. The short range receiver 17 may e.g. be configured to only be able to receive the short range information within a radius up to 100 metres, or up to 50 metres, or up to 20 metres. In some embodiments, providing S5 short range communication may only be performed if a short range communication receiver 17 is present within a set radius of the short range communication module 15. For example, detection of the short range communication receiver 17 by the short range communication module 15 may activate short range communication.

In some embodiments, the emergency information provided with the short range communication module 15 is encrypted S7 such that encrypted emergency information is provided. In embodiments where the emergency information provided with the short range communication module 15 is encrypted during the step of encrypting S7, the encrypted emergency information is decrypted S8 with the short range communication receiver 17. As such, only the short range communication receiver 17 is adapted to access the emergency information provided through short range communication. A decryption key for decrypting S8 encrypted information may e.g. be distributed by the backend server 11 or the short range communication module 15, or any other system of the vehicle 2 that the short range communication module 15 is in communicative contact with.

The long range communication may be encrypted in the same way that the short range communication is encrypted.

The emergency information collected by the sensor module 3 during the step of collecting S4 is also provided S6 with a long range communication module 7 to at least one long range communication receiver 9 such that the emergency information may be used for emergency response prioritization. Examples of long range communication include cellular data networks or satellite networks. Providing S6 long range communication may be performed simultaneously as providing S5 short range communication. Alternatively, providing S6 long range communication may be performed before providing S5 short range communication. Alternatively, providing S6 long range communication may be performed after providing S5 short range communication. Alternatively, providing S6 long range communication may be performed continuously whereas providing S5 short range communication may be performed during a discrete time interval. Alternatively, providing S6 long range communication may be performed during a discrete time interval whereas providing S5 short range communication may be performed continuously.

A long range communication receiver 9 may be any device configured to receive long range communication. In some embodiments, the system 1 is configured for providing S6 emergency information with a long range communication module 7 to a backend server 11 for storing and processing emergency information from a vehicle accident.

In some embodiments, pre-sensing S1 is performed during which at least one physiological parameter is sensed. Pre-sensing S1 is performed before detecting a vehicle accident. The pre-sensed data of the physiological parameter is then during storing S2 data of the physiological parameter stored in the backend server 11. Storing S2 is performed before detecting S3 a vehicle accident.

In some embodiments, comparing S9 the emergency information from the vehicle accident with the data of the physiological parameter stored in the backend server is performed. By comparing S9 the physiological parameter or the physical parameter with the emergency information from the vehicle accident, processed data of the physiological parameter or the physical parameter is produced. The processed data may then be provided S10 to at least one long range communication receiver 9. During providing S10, the processed data may be transmitted to e.g. an emergency dispatcher in order for the emergency dispatcher to be able to even further optimize any emergency response.

The person skilled in the art realizes that the present invention by no means is limited to the embodiments described above. The features of the described embodiments may be combined in different ways, and many modifications and variations are possible within the scope of the appended claims. In the claims, any reference signs placed between parentheses shall not be construed as limiting the claim. The word "comprising" does not exclude the presence of other elements or steps than those listed in the claim.

## Claims

1. Vehicle emergency communication system (1) for providing emergency information from a vehicle accident, the system (1) comprising:
a sensor module (3) adapted to be arranged in a vehicle (2) for sensing and collecting emergency information from a vehicle accident, the sensor module (3) comprising a radar sensor (5) for detecting at least one physiological parameter of a vehicle passenger;
a short range communication module (15) for providing emergency information to a short range communication receiver (17); and
a long range communication module (7) for providing emergency information to a plurality of long range communication receivers (9) such that the emergency information may be used for emergency response prioritization; wherein
the plurality of long range communication receivers (9) includes a backend server (11) for storing and processing emergency information from a vehicle accident, and an emergency responder device (13) adapted to be arranged at an emergency responder; and
the sensor module (3) is configured for pre-sensing said at least one physiological parameter before detecting a vehicle accident, wherein the backend server (11) is configured for storing data of said physiological parameter before detecting a vehicle accident, comparing the emergency information from the vehicle accident with the data of said physical parameter stored in the backend server (11), thereby producing processed data of said physical parameter, and providing said processed data to the emergency responder device (13).

2. Vehicle emergency communication system (1) according to claim 1, wherein the physiological parameter is respiration state.

3. Vehicle emergency communication system (1) according to claim 2, wherein respiration state comprises respiration rate and respiration depth.

4. Vehicle emergency communication system (1) according to any preceding claim, wherein the short range communication module (15) is a short range radio module.

5. Vehicle emergency communication system (1) according to any preceding claim, wherein the short range communication receiver (17) is a hand-held device.

6. Vehicle emergency communication system according to any preceding claim, wherein the means for short range communication is adapted to encrypt the emergency information that encrypted emergency information is provided, and wherein short range communication receiver ( 17) is adapted to decrypting the encrypted emergency information.

7. Method for providing emergency information from a vehicle accident, the method comprising:
detecting a vehicle accident;
collecting emergency information from the vehicle accident comprising sensing at least one physical parameter of a vehicle passenger with a radar sensor (5);
providing emergency information with a means for short range communication such that the emergency information may be retrieved by at least one short range communication receiver (17);
providing emergency information with a means for long range communication to a plurality of long range communication receivers (9) such that the emergency information may be used for emergency response prioritization; the method further comprising:
pre-sensing said at least one physiological parameter before detecting a vehicle accident;
storing data of said physiological parameter in a backend server (11) before detecting a vehicle accident;
comparing the emergency information from the vehicle accident with the data of said physical parameter stored in the backend server (11), thereby producing processed data of said physical parameter; and
providing the processed data of said physical parameter to an emergency responder device (13).

8. Method according to claim 5, wherein one physiological parameter is respiration state.

9. Method according to claim 7 or 8, wherein one physiological parameter is organ position.

10. Method according to any preceding claim, further comprising:
encrypting the emergency information provided with the means for short range communication such that encrypted emergency information is provided; and
decrypting the encrypted emergency information with the short range communication receiver (17).

## Patentansprüche

1. Fahrzeugnotfallkommunikationssystem (1) zum Bereitstellen von Notfallinformationen zu einem Fahrzeugunfall, wobei das System (1) Folgendes umfasst:
ein Sensormodul (3), das angepasst ist, zum Erfassen und Sammeln von Notfallinformationen zu einem Fahrzeugunfall in einem Fahrzeug (2) angeordnet zu sein, wobei das Sensormodul (3) einen Radarsensor (5) zum Detektieren von mindestens einem physiologischen Parameter eines Fahrzeuginsassen umfasst;
ein Kurzbereichskommunikationsmodul (15) zum Bereitstellen von Notfallinformationen für einen Kurzbereichskommunikationsempfänger (17); und
ein Weitbereichskommunikationsmodul (7) zum Bereitstellen von Notfallinformationen für eine Vielzahl von Weitbereichskommunikationsempfängern (9), derart, dass die Notfallinformationen für eine Notfallreaktionspriorisierung verwendet werden können; wobei
die Vielzahl von Weitbereichskommunikationsempfängern (9) zum Speichern und Verarbeiten von Notfallinformationen zu einem Fahrzeugunfall einen Backendserver (11) sowie eine Notfallantwortgebervorrichtung (13) beinhaltet, die angepasst ist, in einem Notfallantwortgeber angeordnet zu sein; und
das Sensormodul (3) dazu ausgelegt ist, den mindestens einen physiologischen Parameter vor Detektieren eines Fahrzeugunfalls vorab zu erfassen, wobei der Backendserver (11) zum Speichern von Daten des physiologischen Parameters vor Detektieren eines Fahrzeugunfalls, Vergleichen der Notfallinformationen zum Fahrzeugunfall mit den Daten des im Backendserver (11) gespeicherten physischen Parameters, dadurch Erstellen von verarbeiteten Daten des physischen Parameters, und Bereitstellen der verarbeiteten Daten für die Notfallantwortgebervorrichtung (13) ausgelegt ist.

2. Fahrzeugnotfallkommunikationssystem (1) nach Anspruch 1, wobei der physiologische Parameter ein Atmungszustand ist.

3. Fahrzeugnotfallkommunikationssystem (1) nach Anspruch 2, wobei der Atmungszustand eine Atemfrequenz und eine Atmungstiefe umfasst.

4. Fahrzeugnotfallkommunikationssystem (1) nach einem der vorhergehenden Ansprüche, wobei das Kurzbereichskommunikationsmodul (15) ein Kurzbereichsfunkmodul ist.

5. Fahrzeugnotfallkommunikationssystem (1) nach einem der vorhergehenden Ansprüche, wobei der Kurzbereichskommunikationsempfänger (17) eine Handvorrichtung ist.

6. Fahrzeugnotfallkommunikationssystem nach einem der vorhergehenden Ansprüche, wobei das Mittel für eine Kurzbereichskommunikation angepasst ist, die Notfallinformationen zu verschlüsseln, derart, dass die verschlüsselten Notfallinformationen bereitgestellt werden, und wobei der Kurzbereichskommunikationsempfänger (17) angepasst ist, die verschlüsselten Notfallinformationen zu entschlüsseln.

7. Verfahren zum Bereitstellen von Notfallinformationen zu einem Fahrzeugunfall, wobei das Verfahren Folgendes umfasst:
Detektieren eines Fahrzeugunfalls;
Sammeln von Notfallinformationen zum Fahrzeugunfall, was das Erfassen von mindestens einem physischen Parameter eines Fahrzeuginsassen mit einem Radarsensor (5) umfasst;
Bereitstellen von Notfallinformationen mit einem Mittel für eine Kurzbereichskommunikation, derart, dass die Notfallinformationen von mindestens einem Kurzbereichskommunikationsempfänger (17) abgerufen werden können;
Bereitstellen von Notfallinformationen mit einem Mittel für eine Weitbereichskommunikation für eine Vielzahl von Weitbereichskommunikationsempfängern (9), derart, dass die Notfallinformationen für eine Notfallreaktionspriorisierung verwendet werden können;
wobei das Verfahren ferner Folgendes umfasst:
vorab Erfassen des mindestens einen physiologischen Parameters vor Detektieren eines Fahrzeugunfalls;
Speichern von Daten des physiologischen Parameters in einem Backendserver (11) vor Detektieren eines Fahrzeugunfalls;
Vergleichen der Notfallinformationen zum Fahrzeugunfall mit den Daten des im Backendserver (11) gespeicherten physischen Parameters, dadurch Erstellen von verarbeiteten Daten des physischen Parameters; und
Bereitstellen der verarbeiteten Daten des physischen Parameters für eine Notfallantwortgebervorrichtung (13).

8. Verfahren nach Anspruch 5, wobei ein physiologischer Parameter ein Atmungszustand ist.

9. Verfahren nach Anspruch 7 oder 8, wobei ein physiologischer Parameter eine Organposition ist.

10. Verfahren nach einem der vorhergehenden Ansprüche, das ferner Folgendes umfasst:
Verschlüsseln der Notfallinformationen, die mit dem Mittel für eine Kurzbereichskommunikation bereitgestellt werden, derart, dass verschlüsselte Notfallinformationen bereitgestellt werden; und
Entschlüsseln der verschlüsselten Notfallinformationen mit dem Kurzbereichskommunikationsempfänger (17).

## Revendications

1. Système de communication d'urgence pour véhicule (1) permettant de fournir des informations d'urgence provenant d'un accident de véhicule, le système (1) comprenant :
un module capteur (3) conçu pour être agencé dans un véhicule (2) afin de détecter et de collecter des informations d'urgence provenant d'un accident de véhicule, le module capteur (3) comprenant un capteur radar (5) permettant de détecter au moins un paramètre physiologique d'un passager de véhicule ;
un module de communication à courte portée (15) permettant de fournir des informations d'urgence à un récepteur de communication à courte portée (17) ; et
un module de communication à longue portée (7) permettant de fournir des informations d'urgence à une pluralité de récepteurs de communication à longue portée (9) de telle sorte que les informations d'urgence puissent être utilisées pour prioriser les interventions d'urgence ;
la pluralité de récepteurs de communication à longue portée (9) comprenant un serveur dorsal (11) permettant de stocker et de traiter les informations d'urgence provenant d'un accident de véhicule, ainsi qu'un dispositif d'agent d'intervention d'urgence (13) conçu pour être agencé au niveau d'un agent d'intervention d'urgence ; et
le module capteur (3) étant configuré pour prédétecter ledit au moins un paramètre physiologique avant de détecter un accident de véhicule, le serveur dorsal (11) étant configuré pour stocker les données dudit paramètre physiologique avant de détecter un accident de véhicule, pour comparer les informations d'urgence provenant de l'accident de véhicule aux données dudit paramètre physique stockées sur le serveur dorsal (11), produisant ainsi des données traitées dudit paramètre physique, et pour fournir lesdites données traitées au dispositif d'agent d'intervention d'urgence (13).

2. Système de communication d'urgence pour véhicule (1) selon la revendication 1, dans lequel le paramètre physiologique est un état respiratoire.

3. Système de communication d'urgence pour véhicule (1) selon la revendication 2, dans lequel l'état respiratoire comprend une fréquence respiratoire et une profondeur respiratoire.

4. Système de communication d'urgence pour véhicule (1) selon l'une quelconque des revendications précédentes, dans lequel le module de communication à courte portée (15) est un module radio à courte portée.

5. Système de communication d'urgence pour véhicule (1) selon l'une quelconque des revendications précédentes, dans lequel le récepteur de communication à courte portée (17) est un dispositif portable.

6. Système de communication d'urgence pour véhicule selon l'une quelconque des revendications précédentes, dans lequel le moyen de communication à courte portée est conçu pour crypter les informations d'urgence de manière à fournir des informations d'urgence cryptées, et dans lequel le récepteur de communication à courte portée (17) est conçu pour décrypter les informations d'urgence cryptées.

7. Procédé de fourniture d'informations d'urgence provenant d'un accident de véhicule, le procédé comprenant les étapes consistant à :
détecter un accident de véhicule ;
collecter des informations d'urgence provenant de l'accident de véhicule, ce qui comprend l'étape consistant à détecter au moins un paramètre physique d'un passager de véhicule au moyen d'un capteur radar (5) ;
fournir les informations d'urgence à l'aide d'un moyen de communication à courte portée de telle sorte que les informations d'urgence puissent être récupérées par au moins un récepteur de communication à courte portée (17) ;
fournir les informations d'urgence à l'aide d'un moyen de communication à longue portée à une pluralité de récepteurs de communication à longue portée (9) de telle sorte que les informations d'urgence puissent être utilisées pour prioriser les interventions d'urgence ;
le procédé comprenant en outre les étapes consistant à :
prédétecter ledit au moins un paramètre physiologique avant de détecter un accident de véhicule ;
stocker les données dudit paramètre physiologique sur un serveur dorsal (11) avant de détecter un accident de véhicule ;
comparer les informations d'urgence provenant de l'accident de véhicule aux données dudit paramètre physique stockées sur le serveur dorsal (11), produisant ainsi des données traitées dudit paramètre physique ; et
fournir les données traitées dudit paramètre physique à un dispositif d'agent d'intervention d'urgence (13).

8. Procédé selon la revendication 5, dans lequel le paramètre physiologique est un état respiratoire.

9. Procédé selon la revendication 7 ou 8, dans lequel un paramètre physiologique est une position d'organe.

10. Procédé selon l'une quelconque des revendications précédentes, comprenant en outre les étapes consistant à :
crypter les informations d'urgence fournies par le moyen de communication à courte portée de manière à fournir des informations d'urgence cryptées ; et
décrypter les informations d'urgence cryptées à l'aide du récepteur de communication à courte portée (17).
